# EUROPÄISCHE PATENTSCHRIFT

(11) **EP 1 031 449 B1**
(45) Veröffentlichungstag und Bekanntmachung des Hinweises auf die Patenterteilung: **30.10.2002**
(21) Anmeldenummer: 00103687.0
(22) Anmeldetag: 22.02.2000
(51) Int. Cl.: B60J 7/22

(54) **Öffnungsfähiges Fahrzeugdach mit ausstellbarem Windabweiser**
Open roof for vehicle provided with a tiltable wind deflector
Toit ouvrant pour véhicule avec déflecteur de vent escamotable

(30) Priorität: 24.02.1999 DE 19907806
(43) Veröffentlichungstag der Anmeldung: 30.08.2000
(73) Patentinhaber: Webasto Vehicle Systems International GmbH, 82131 Stockdorf (DE)
(72) Erfinder: Losert, Andreas, 82211 Herrsching (DE)
(74) Vertreter: Wiese, Gerhard

(56) Entgegenhaltungen:
- EP-A- 0 895 888
- DE-A- 19 701 479

## Beschreibung

Die Erfindung betrifft ein Fahrzeugdach gemäß dem, in DE 19701479 A offenbarten, Oberbegriff von Anspruch 1, insbesondere ein Hebe-, Schiebe-, Schiebe-Hebe- oder Spoilerdach.

Solche gattungsgemäßen Fahrzeugdächer sind beispielsweise auch aus DE 31 37 191 C2 und DE 198 27 106 Al bekannt. Dabei wird das Verschlußelement von dem Deckel eines Schiebedachs gebildet, der in Dachlängsrichtung mittels zweier parallel angeordneter Antriebskabel, die jeweils auf einer Seite des Deckels angreifen, in Dachlängsrichtung verschiebbar ist. In seiner Schließstellung hält der Deckel den in Richtung seiner Ausstellposition vorgespannten Windabweiser entgegen der Vorspannkraft in dessen Ruhestellung nieder. Beim Öffnen des Schiebedeckels endet nach einem vorbestimmten Öffnungsweg die Niederhalte-Funktion des Schiebedeckels, wodurch der Windabweiser anschließend durch seine Ausstellmechanik, die im wesentlichen aus einem an dem hinteren Ende des Windabweisers angelenkten Schwenkhebel besteht, aufgrund der Wirkung der Vorspannkraft in seine Ausstellposition ausgestellt wird.

Nachteilig dabei ist, daß der Windabweiser schon relativ nahe der Schließstellung des Deckels, d.h. schon nach einem relativ kurzen zurückgelegten Öffnungsweg, vollständig ausgeschwenkt wird, obwohl diese Position des Windabweisers, in welcher er die Geräuschentwicklung des anströmenden Fahrtwinds an der geöffneten Dachöffnung vermindert, erst bei vollständig geöffneter Dachöffnung, d.h. bei vollständig zurückgeschobenem Schiebedeckel, erforderlich ist. Insofern ist bei diesen bekannten Systemen keine hinreichende Kopplung zwischen dem von dem Schiebedeckel zurückgelegten Öffnungsweg und der Windabweiserstellung vorgesehen.

Es ist Aufgabe der vorliegenden Erfindung, ein öffnungsfähiges Fahrzeugdach mit einem verschiebbaren Verschlußelement und einem ausstellbaren Windabweiser zu schaffen, bei welchem der Windabweiser in Abhängigkeit von der Öffnungsstellung des Verschlußelements jeweils nur soweit als für die Fahrtwindgeräuschminderung erforderlich ausgestellt wird.

Diese Aufgabe wird durch ein Fahrzeugdach gelöst, wie es in Anspruch 1 definiert ist. Vorteilhafte Ausgestaltungen der Erfindung sind den Unteransprüchen zu entnehmen.

Die erfindungsgemäße Lösung sorgt vorteilhaft dafür, daß auf einfache Weise eine zweckmäßige Korrelation zwischen dem von dem Verschlußelement bereits zurückgelegten Öffnungsweg und dem Ausstellgrad des Windabweisers geschaffen wird, so daß der Windabweiser jeweils nur so weit als erforderlich ausgestellt wird.

In vorteilhafter weiterer Ausgestaltung der Erfindung befindet sich der Windabweiser bei geschlossenem Verschlußelement in seiner Ruhestellung und das bzw. jedes Antriebskabel und die Ausstellmechanik sind so ausgebildet, daß ein Ausstellen des Windabweisers aus der Ruhestellung erst beginnt, wenn das Verschlußelement um eine vorbestimmte Strecke in Öffnungsrichtung verschoben wurde. Dies trägt dem Umstand Rechnung, daß bei nur schwach geöffnetem Verschlußelement auch ohne ausgestellten Windabweiser keine übermäßige Geräuschentwicklung auftritt. Vorzugsweise beträgt die vorbestimmte Strecke dabei etwa 2/3 des maximalen Öffnungswegs.

Ferner ist die Ausstellmechanik vorzugsweise so ausgebildet, daß die Ausstellbewegung des Windabweisers in dem Bereich nach dem Durchlaufen der vorbestimmten Strecke in etwa proportional zu der weiteren Öffnungsbewegung des Verschlußelements erfolgt.

Aus konstruktiven Gründen ist der Windabweiser vorzugsweise mit einer Vorspannkraft in Richtung seiner Ruhestellung beaufschlagt.

Vorzugsweise sind zwei parallel angeordnete Antriebskabel, die von einem gemeinsamen Antriebsritzel angetrieben werden, vorgesehen, wobei die Ausstellmechanik des Windabweisers auf jeder Seite einen Ausstellhebel umfaßt, dessen eines Ende an dem Windabweiser angelenkt ist und dessen anderes Ende von dem zweiten Ende des entsprechenden Antriebskabels in Dachlängsrichtung verschiebbar ist. Dies stellt eine einfache und zuverlässige Ausgestaltung der Antriebs bzw. Ausstellmechanik dar. Zweckmäßigerweise ist dabei das zweite Ende eines jeden Antriebskabels mit einem in einer dachfesten Führung geführten Schlitten gekoppelt.

Bei dem Verschlußelement handelt es sich vorzugsweise um den Deckel eines Schiebe-, Schiebe-Hebe- oder Spoilerdaches.

Im folgenden wird eine Ausführungsform der Erfindung anhand der beigefügten Zeichnungen beispielhaft näher erläutert. Es zeigen:
- Fig. 1: eine schematische Ansicht eines erfindungsgemäßen Fahrzeugdaches; und
- Fig. 2 bis 4: schematische Seitenansichten des Fahrzeugdaches aus Fig. 1, wobei verschiedene Betriebsstellungen gezeigt sind.

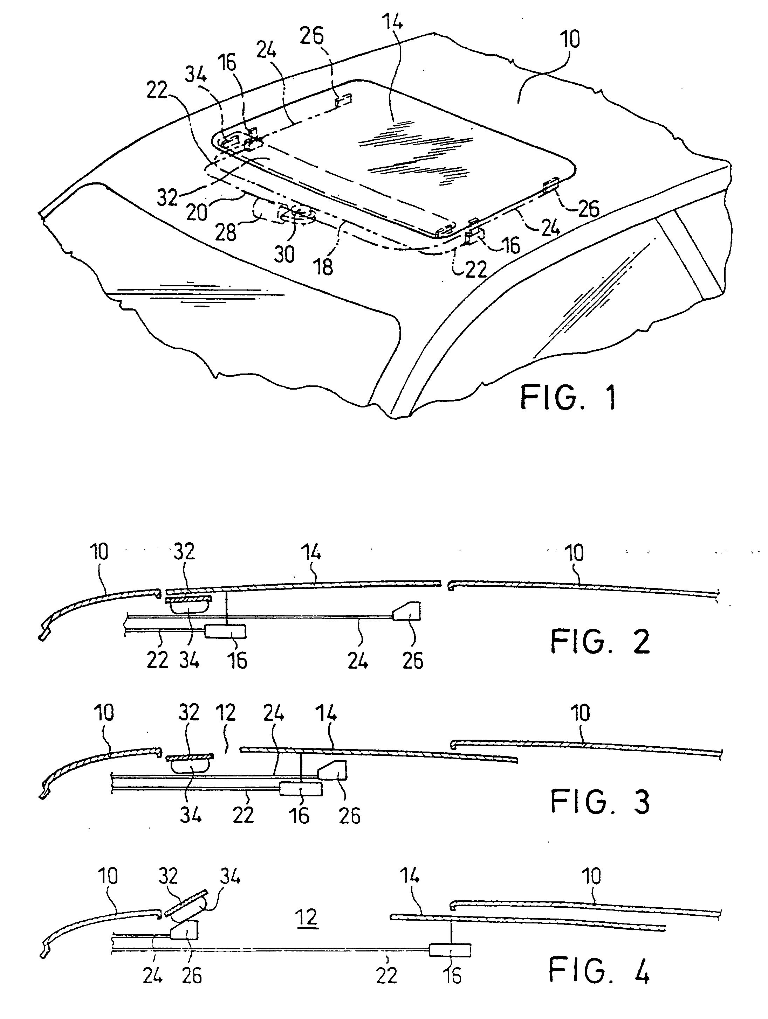

Gemäß Fig. 1 ist in einer festen Dachhaut 10 eine Dachöffnung 12 ausgebildet, welche von einem in Dachlängsrichtung verschiebbar geführten Schiebedeckel 14 verschlossen wird, wenn sich dieser in seiner Schließstellung befindet. Zum Verschieben des Deckels 14 ist an seinen beiden Seiten jeweils ein in einer nicht dargestellten Führung geführter Schlitten 16 angebracht, an dem jeweils das Vorlaufende eines von zwei zu beiden Seiten der Dachöffnung 12 parallel angeordneten üblichen drucksteifen Antriebskabel 18 bzw. 20 kraftschlüssig angreift. Die Vorlaufenden der Kabel 18,20 sind dabei mit dem Bezugszeichen 22 versehen, während die Auslaufenden mit dem Bezugszeichen 24 versehen sind. Die beiden Auslaufenden 24 sind jeweils mit einem ebenfalls in Dachlängsrichtung verschiebbar geführten weiteren Schlitten 26 versehen. Die beiden Antriebskabel 18, 20 werden in bekannter Weise in ihrem vorderen mittleren Abschnitt von einem von einem Motor 28 über ein von einem Schneckengetriebe angetriebenes Antriebsritzel 30 angetrieben. Gemäß Fig. 1 sind die Kabel 18, 20 räumlich so angeordnet, daß sich bei Betätigung des Motors 28 die Vorlaufenden 22 und die Auslaufenden, 24 eines jeden Kabels 18, 20 an den Längsseiten der Dachöffnung 12 in zueinander entgegengesetzten Richtungen bewegen. Dabei sind die Kabel 18, 20 in bekannter Weise in entsprechenden dachfesten Kabelführungen (nicht dargestellt) an den Führungsschienen geführt.

Am vorderen Rand der Dachöffnung 12 ist ein aus einer Ruhestellung ausstellbarer Windabweiser 32 vorgesehen, der in seinem vorderen Bereich schwenkbar und vorzugsweise auch in Höhenrichtung verschiebbar gelagert ist, so daß er zunächst angehoben werden kann und dann mit seinem hinteren Rand ausstellbar ist. In der dargestellten Ruhestellung liegt der Windabweiser 32 unter dem vorderen Randbereich des Deckels 14. Das Ausstellen des Windabweisers 32 erfolgt mittels einer nur schematisch bei 34 angedeuteten Ausstellmechanik. Die Ausstellmechanik umfaßt ein Federelement, mittels welchem der Windabweiser 32 mit einer Vorspannkraft zu seiner Ruhestellung hin beaufschlagt ist. Diese Vorspannung verhindert in jeder Stellung des Windabweisers 32 ein Klappern desselben und bewirkt in Verbindung mit den weiteren Schlitten 26 eine Schließbewegung des Windabweisers 32.

Bei der in Fig. 2 dargestellten Seitenansicht (Schließstellung des Deckels 14 wie in Fig. 1) befindet sich der Windabweiser 32 aufgrund der Vorspannung in seiner Ruhestellung. Bei Betätigung des Motors 28 zum Öffnen des Deckels 14 bewegen sich die Vorlaufenden 22 der Kabel 18 bzw. 20 nach hinten, wodurch die Schlitten 16 und damit der Deckel 14 nach hinten unter die feste Dachhaut 10 geschoben werden. Dabei ist die (nicht dargestellte) Verstellmechanik des Deckels 14 in bekannter Weise so ausgebildet, daß der Deckel 14 dabei zunächst mit seiner Hinterkante abgesenkt wird. Das Auslaufende 24 des Kabels 18 bzw. 20 bewegt sich dabei entsprechend der in Fig. 1 gezeigten Kabelanordnung in entgegengesetzter Richtung um die gleiche Strecke nach vorn.

Bei der in Fig. 3 dargestellten Zwischenstellung ist die Dachöffnung 12 etwa zur Hälfte geöffnet, wobei sich der Windabweiser 32 aufgrund der Vorspannung immer noch in seiner Ruhestellung befindet.

In Fig. 4 ist eine Stellung dargestellt, in welcher der Deckel 14 nahezu vollständig unter die feste Dachhaut 10 nach hinten geschoben ist, d.h. die Dachöffnung 12 ist zum großen Teil freigelegt. In dieser Stellung hat sich der an dem Auslaufende 24 des Kabels 18 bzw. 20 angebrachte weitere Schlitten 26 so weit nach vorn bewegt, daß er in Eingriff mit der Ausstellmechanik 34 des Windabweisers 32 tritt und durch seine weitere Verschiebung nach vorn in Abhängigkeit von seiner Stellung ein Ausstellen (Anheben und Ausschwenken) des Windabweisers 32 entgegen dessen Vorspannung bewirkt. Die Verstellmechanik 34 ist vorzugsweise so ausgebildet, daß das Ausstellen des Windabweisers 32 im wesentlichen proportional zu der weiteren Verschiebung des weiteren Schlittens 26 nach vorn, und damit in etwa proportional zu der Öffnungsbewegung des Deckels 14, erfolgt Die Ausstellmechanik 34 kann zu diesem Zweck so gestaltet sein, daß sie eine entsprechend geformte Kulissenbahn umfaßt, in welche ein an dem weiteren Schlitten 26 des Auslaufendes 24 vorgesehener Kulissenstift eingreift, sobald sich der weitere Schhitten 26 dem Windabweiser 32 entsprechend genähert hat. Es kommen jedoch auch Lösungen mit Auflauframpen, Hebeln und ähnlichem in Frage.

Die Wegstrecke, welche der Deckel 14 und damit der weitere Schlitten 26 ausgehend von der Schließstellung zurücklegen kann, bevor der weitere Schlitten 26 mit der Ausstellmechanik 34 in Eingriff kommt und ein entsprechendes Ausstellen des Windabweisers 32 bewirkt, beträgt vorzugsweise etwa 2/3 des maximalen Öffnungswegs des Deckels 14. Somit wird der Windabweiser 32 etwa während des letzten Drittels der vollständigen Öffnungsbewegung des Deckels 14 vollständig ausgestellt.

Beim Schließen des Deckels 14 erfolgt der oben beschriebene Ablauf in umgekehrter Weise, d.h. die auf den Windabweiser 32 einwirkende Vorspannkraft bewirkt ein Absenken des Windabweisers 32 zu seiner Ruhestellung hin in Abhängigkeit von der Position des weiteren Schlittens 26 des Auslaufendes 24 der Kabel 18 bzw. 20. Der zurückgleitende weitere Schlitten 26 ermöglicht dabei der Vorspannkraft ein allmähliches Absenken des Windabweisers 32.

Obschon die Erfindung bisher unter Bezugnahme auf ein Schiebedach beschrieben wurde, versteht es sich, daß die erfindungsgemäße Windabweisersteuerung in entsprechender Weise auch für Schiebe-Hebe- oder Spoiler-Dächer verwendet werden kann. Ferner kann es sich bei dem Verschlußelement auch um einen Lamellenverbund oder ein Faltdach handeln.

Statt des dargestellten, bei Schließstellung des Deckels 14 unterhalb desselben angeordneten Windabweisers 32 läßt sich mit der beschriebenen Mechanik auch eine Windabweislamelle betätigen, die in Schließstellung vor dem Deckel 14 liegt und den vorderen Teil der Dachöffnung 12 abdeckt.

### Bezugszeichenliste

- feste Dachhaut: **10**
- Dachöffnung: **12**
- Deckel: **14**
- Schlitten am 14: **16**
- Antriebskabel: **18,20**
- Vorlaufende von 18, 20: **22**
- Auslaufende von 18, 20: **24**
- Weiterer Schlitten (an 24): **26**
- Motor: **28**
- Antriebsritzel: **30**
- Windabweiser: **32**
- Windabweisermechanik: **34**

## Patentansprüche

1. Fahrzeugdach mit einem in der Dachebene verschiebbaren Verschlußelement (14) zum Verschließen/Freigeben einer Dachöffnung (12), mindestens einem drucksteifen Antriebskabel (18, 20) zum Verschieben des Verschlußelements (14) sowie einem mittels einer Ausstellmechanik (34) aus einer Ruhestellung ausstellbaren Windabweiser (32) an dem vorderen Rand der Dachöffnung (12), wobei das bzw. jedes Antriebskabel (18, 20) mit seinem ersten Ende (22) in Kraftschluß mit einem Verstellelement (16) des Verschlußelements (14) steht und in seinem ittleren Bereich von einem Antrieb (28, 30) angetrieben wird **dadurch gekennzeichnet, daß** das zweite Ende (24) des bzw. jedes Antriebskabels (18, 20) sich bei betätigtem Antrieb (28, 30) in entgegengesetzter Richtung zu dem ersten Ende (22) bewegt, und
daß ein weiteres Verstellelement (26) am zweiten Ende (24) des bzw. jedes Antriebskabels (18, 20) die Ausstellmechanik (34) des Windabweisers (32) betätigt.

2. Fahrzeugdach nach Anspruch 1, **dadurch gekennzeichnet, daß** der Windabweiser (32) sich bei geschlossenem Verschlußelement (14) in seiner Ruhestellung befindet und das bzw. jedes Antriebskabel (18, 20) und die Ausstellmechanik (34) so ausgebildet sind, daß ein Ausstellen des Windabweisers aus der Ruhestellung erst beginnt, wenn das Verschlußelement um eine vorbestimmte Strecke in Öffnungsrichtung verschoben wurde.

3. Fahrzeugdach nach Anspruch 2, **dadurch gekennzeichnet, daß** die vorbestimmte Strecke etwa zwei Drittel des maximalen Öffnungswegs beträgt.

4. Fahrzeugdach nach Anspruch 2 oder 3, **dadurch gekennzeichnet, daß** die Austellmechanik (34) so ausgebildet ist, daß die Ausstellbewegung des Windabweisers (32) in dem Bereich nach dem Durchlaufen der vorbestimmten Strecke in etwa proportional zu der Öffnungsbewegung des Verschlußelements erfolgt.

5. Fahrzeugdach nach einem der vorhergehenden Ansprüche, **dadurch gekennzeichnet, daß** der Windabweiser (32) mit einer Vorspannkraft in Richtung seiner Ruhestellung beaufschlagt ist.

6. Fahrzeugdach nach einem der vorhergehenden Ansprüche, **dadurch gekennzeichnet, daß** das zweite Ende (24) des bzw. jeden Antriebskabels (18, 20) mit einem in einer dachfesten Führung geführten und dem weiteren Verstellelement entsprechenden Schlitten (26) gekoppelt ist.

7. Fahrzeugdach nach einem der vorhergehenden Ansprüche, **dadurch gekennzeichnet, daß** zwei parallel angeordnete Antriebskabel (18, 20) vorgesehen sind.

8. Fahrzeugdach nach Anspruch 7, **dadurch gekennzeichnet, daß** die beiden Antriebskabel (18, 20) von einem gemeinsamen Antriebsritzel (30) angetrieben werden.

9. Fahrzeugdach nach Anspruch 7 oder 8. **dadurch gekennzeichnet, daß** das Verschlußelement(14) in Dachlängsrichtung verschiebbar ist und an den beiden Längsseiten des Verschlußelements jeweils eines der weiteren Verstellelemente (26) vorgesehen ist.

10. Fahrzeugdach nach einem der vorhergehenden Ansprüche, **dadurch gekennzeichnet, daß** es sich bei dem Verschlußelement (14) um den Deckel eines Schiebe-, Schiebc-Hebe- oder Spoilerdaches handelt.

## Claims

1. A vehicle roof with, adapted to be displaced in the roof plane, a closure element (14) for closing/exposing a roof opening (12), at least one compression-resistant drive cable (18, 20) for displacing the closure element (14) and with a wind deflector (32) adapted to be pushed out from an inoperative position by means of a pushing-out mechanism (34) and situated on the leading edge of the roof opening (12), whereby the or each drive cable (18, 20) has its first end (22) in force-locking engagement with a displacing element (16) of the closure element (14) while its middle portion is driven by a drive (28, 30), **characterised in that** the second end (24) of the or of each drive cable (18, 20), while the drive (28, 30) is actuated, moves in the opposite direction to the first end (22) and **in that** a further displacing element (26) at the second end (24) of the or of each drive cable (18, 20) actuates the pushing-out mechanism (34) of the wind deflector (32).

2. A vehicle roof according to claim 1, **characterised in that**, when the closure element (14) is closed, the wind deflector (32) is in its inoperative position and the or each drive cable (18, 20) and the pushing-out mechanism (34) are so constructed that a pushing-out of the wind deflector from the inoperative position begins only when the closure element has been displaced by a predetermined amount in the direction of opening.

3. A vehicle roof according to claim 2, **characterised in that** the predetermined distance amounts to approximately two-thirds of the maximum opening distance.

4. A vehicle roof according to claim 2 or 3, **characterised in that** the pushing-out mechanism (34) is so constructed that the movement of pushing out the wind deflector (32) in the region following passage through the predetermined distance takes place substantially in proportion to the opening movement of the closure element.

5. A vehicle roof according to one of the preceding claims, **characterised in that** the wind deflector (32) is biased in the direction of its inoperative position by a pretensioning force.

6. A vehicle roof according to one of the preceding claims, **characterised in that** the second end (24) of the or of each drive cable (18, 20) is coupled to a slide member (26) disposed in a guide rigid with the roof and corresponding to the second displacing element.

7. A vehicle roof according to one of the preceding claims, **characterised in that** two drive cables (18, 20) are provided which are disposed in parallel.

8. A vehicle roof according to claim 7, **characterised in that** the two drive cables (18, 20) are driven by a common drive pinion (30).

9. A vehicle roof according to claim 7 or 8, **characterised in that** the closure element (14) is displaceable in the longitudinal direction of the roof and **in that** in each case one of the further displacing elements (26) is provided on each of the longitudinal sides of the closure element.

10. A vehicle roof according to one of the preceding claims, **characterised in that** the closure element (14) is the cover of a sliding, sliding/raising or spoiler roof.

## Revendications

1. Toit de véhicule comprenant un élément obturateur (14) pouvant coulisser dans le plan du pavillon, pour fermer/libérer une ouverture (12) du pavillon ; au moins un câble d'entraînement (18, 20) rigide à la pression, pour faire coulisser l'élément obturateur (14) ; ainsi qu'un déflecteur de vent (32) situé sur le bord antérieur de l'ouverture (12) du pavillon et pouvant être déployé à partir d'une position de repos, au moyen d'un mécanisme déployeur (34), le ou chaque câble d'entraînement (18, 20) étant respectivement en prise mécanique, par sa première extrémité (22), avec un élément de réglage (16) de l'élément obturateur (14), et étant mené par un entraînement (28, 30) dans sa région centrale, **caractérisé par le fait que** la seconde extrémité (24) du ou de chaque câble d'entraînement (18, 20) est respectivement animée d'un mouvement en sens inverse de la première extrémité (22), lorsque l'entraînement (28, 30) est actionné ; et
**par le fait qu'**un élément supplémentaire de réglage (26) actionne le mécanisme déployeur (34) du déflecteur de vent (32) à la seconde extrémité respective (24) du ou de chaque câble d'entraînement (18, 20).

2. Toit de véhicule, selon la revendication 1, **caractérisé par le fait que** le déflecteur de vent (32) occupe sa position de repos lorsque l'élément obturateur (14) est fermé, le ou chaque câble d'entraînement (18, 20) et le mécanisme déployeur (34) étant réalisés de telle sorte qu'un déploiement du déflecteur de vent, à partir de la position de repos, ne débute que lorsque l'élément obturateur a été animé d'un coulissement d'un trajet prédéterminé dans la direction d'ouverture.

3. Toit de véhicule, selon la revendication 2, **caractérisé par le fait que** le trajet prédéterminé représente environ deux tiers de la course d'ouverture maximale.

4. Toit de véhicule, selon la revendication 2 ou 3, **caractérisé par le fait que** le mécanisme déployeur (34) est réalisé de façon telle que le mouvement de déploiement du déflecteur de vent (32) s'opère dans la plage succédant à l'accomplissement du trajet prédéterminé, à peu près proportionnellement au mouvement d'ouverture de l'élément obturateur.

5. Toit de véhicule, selon l'une des revendications précédentes, **caractérisé par le fait que** le déflecteur de vent (32) est sollicité par une force de précontrainte en direction de sa position de repos.

6. Toit de véhicule, selon l'une des revendications précédentes, **caractérisé par le fait que** la seconde extrémité respective (24) du ou de chaque câble d'entraînement (18, 20) est accouplée à un chariot (26) qui est guidé dans un guide assujetti au pavillon, et correspond à l'élément supplémentaire de réglage.

7. Toit de véhicule, selon l'une des revendications précédentes, **caractérisé par** la présence de deux câbles d'entraînement (18, 20) agencés parallèlement.

8. Toit de véhicule, selon la revendication 7, **caractérisé par le fait que** les deux câbles d'entraînement (18, 20) sont menés par un pignon commun d'entraînement (30).

9. Toit de véhicule, selon la revendication 7 ou 8, **caractérisé par le fait que** l'élément obturateur (14) peut coulisser dans le sens longitudinal dudit toit et l'un respectif, parmi les éléments supplémentaires de réglage (26), est prévu sur les deux côtés longitudinaux dudit élément obturateur.

10. Toit de véhicule, selon l'une des revendications précédentes, **caractérisé par le fait que** l'élément obturateur (14) se présente comme le capot d'un toit coulissant, d'un toit coulissant et relevable, ou d'un becquet
